# EUROPÄISCHE PATENTANMELDUNG

(11) **EP 2 372 475 A2**
(43) Veröffentlichungstag der Anmeldung: **05.10.2011**
(21) Anmeldenummer: 11160591.1
(22) Anmeldetag: 31.03.2011
(51) Int. Cl.: G05B 19/042

(54) **Steuerung für verstellbare Elemente eines Gebäudes**

(30) Priorität: 31.03.2010 DE 102010013553
(71) Anmelder: Uludasdemir, Nacettin, 33659 Bielefeld (DE)
(72) Erfinder: Uludasdemir, Nacettin, 33659 Bielefeld (DE)
(74) Vertreter: Sonnenberg, Fred

(57) **Zusammenfassung**

Die Vorrichtung sieht die Steuerung einer Vielzahl von verstellbaren Elementen oder anderer verstellbarer Elemente an einem Gebäude vor, wobei zumindest eine Gruppe der verstellbaren ElementeElemente parallel gesteuert wird. Die Vorrichtung umfasst zumindest eine erste Verteilereinrichtung, welche zumindest einen ersten Signaleingang zum Empfangen von Steuersignalen für die erste Gruppe der verstellbaren Elemente, zumindest einen ersten Signalweiterleitungsausgang zum weiterleiten der Steuersignale für die erste Gruppe der verstellbaren Elemente und zumindest einen ersten Steuerungsausgang zum Ansteuern von einem oder mehreren der verstellbaren Elemente der ersten Gruppe umfasst. Dabei ist der erste Steuerungseingang von dem ersten Signalausgang galvanisch getrennt.

Die Beschreibung umfasst auch eine Prüfeinrichtung um die Vorrichtung zu testen.

## Beschreibung

Die vorliegende Erfindung bezieht sich auf Vorrichtungen, Verfahren und Systeme zur Steuerung von elektrisch verstellbaren Fassadenelementen oder anderer elektrisch verstellbarer Gebäudeelemente und auf eine Prüfeinrichtung für die Vorrichtungen und Systeme. Die vorliegende Erfindung bezieht sich insbesondere auf programmierbare Steuerungssysteme und -vorrichtungen zum Verstellen einer Vielzahl von verstellbaren Elementen, wie beispielsweise verstellbare Sonnenschutzelemente wie Markisen, Rollos oder Jalousien oder andere verstellbare Fassadenelemente, sowie auf eine entsprechende Prüfeinrichtung.

### Einleitung

Fassaden moderner Gebäude werden häufig mit verstellbaren Fassadenelementen ausgestattet um die dahinter liegenden Räume variabel und in Abhängigkeit von der gewünschten oder nicht gewünschten Sonneneinstrahlung beschatten zu können. Bei großflächigen Verglasungen, wie sie in der heutigen Architektur häufig verwendet werden, sollen die Sonnenschutzelemente möglichst in Abhängigkeit vom Sonnenstand und der Wettersituation eingestellt werden, um beispielsweise die Räume bei kälteren Temperaturen durch die einfallende Sonnenstrahlung aufzuheizen. Dahingegen ist dieser Effekt bei wärmeren Temperaturen unerwünscht und die Glasflächen sollen möglichst gut beschattet werden.

Als Sonnenschutzelemente sind dazu eine Vielzahl außen liegender oder innen liegender Fassadenelementen, wie Markisen, Rollos oder Jalousien bekannt.

Darüber hinaus soll gewährleistet werden, dass die verstellbaren Fassadenelemente, wenn sie and er Außenseite liegend angebracht sind, bei starkem Wind, Regen oder Schnee hoch- bzw. eingefahren werden, um Beschädigungen zu vermeiden. Auch kann es gewünscht sein, dass die Fassadenelemente individuell ansteuerbar sind, um bspw. einzelne Räume separat zu verdunkeln. Die Fassadenelemente sollen daher in Abhängigkeit von der Witterung und dem Wettergeschehen einstellbar sein.

Die verstellbaren Fassadenelemente werden dazu oft über zentrale, programmierbare Steuerungen gesteuert, welche Wetterdaten wie Lichtintensität, Temperatur, Wind und/oder Regen erhalten und die Fassadenelemente entsprechend ansteuern. Ein Beispiel für eine solche Anlage ist in der DE 10 2008 015 307 A beschrieben.

Bei größeren Fassaden mit einer Vielzahl von einzelnen verstellbaren Elementen wird in der Praxis die Verkabelung jedoch schnell unübersichtlich und komplex. Die Praxis zeigt, dass, insbesondere wenn später Wartungsarbeiten anstehen, die Verkabelung oft nicht mehr nachvollziehbar ist und gewöhnliche Installateure oder Elektriker schnell überfordert sind. Beispielsweise kann häufig nicht nachvollzogen werden, welche Kabel stromführend sind und welche Kabel oder Stecker einfach abgetrennt werden können. Dies erschwert Wartungsarbeiten und es ist im Normalfall notwendig, zur Wartung die vollständige Fassadensteuerung Außerbetrieb zu setzen um bestimmte Bauelemente zu ersetzen oder zu überprüfen. Es ist daher auch bei einfachen Installations- und Wartungsarbeiten meist notwendig, speziell geschultes Personal mit entsprechend höheren Kosten einzusetzen.

Ein weiteres Problem bei Systemen nach dem Stand der Technik ist es, dass nicht speziell ausgebildete Elektriker weder die Verdrahtung solcher komplexen Systeme noch deren Programmierung vornehmen können und mit der Wartung solcher Systeme schnell überfordert sind. In der Praxis ist es daher meist notwendig spezialisierte Fachfirmen zu beauftragen, was mit einem entsprechend höheren Kostenaufwand und oft weiten Anfahrtswegen verbunden ist.

Es ist daher eine Aufgabe der Erfindung eine Vorrichtung zur Steuerung von verstellbaren Elementen eines Gebäudes, ein Verfahren zum Betrieb und eine Einrichtung zur Wartung solcher verstellbaren Elemente bereitzustellen, um eine leichte Installation der Elemente und eine einfache Wartung zu ermöglichen.

### Zusammenfassung der Erfindung

Zur Überwindung der oben genannten Nachteile schlägt die Erfindung eine Vorrichtung zur Steuerung einer Vielzahl von verstellbaren Elementen eines Gebäudes vor, welche zur Anordnung zwischen einer zentralen Steuereinheit und einer Vielzahl von Elementesteuerungen, welche der Vielzahl von verstellbaren Elementen zugeordnet sind, ausgelegt ist. Die Vorrichtung umfasst zumindest eine erste Verteilereinrichtung, welche zumindest einen ersten Signaleingang zum Empfangen von Steuersignalen für die die Vielzahl der verstellbaren Elemente von der zentralen Steuereinheit, zumindest einen ersten Signalweiterleitungsausgang zum Weiterleiten der Steuersignale für die Vielzahl der verstellbaren Elemente und zumindest einen ersten Steuersignalausgang zum Ansteuern zumindest einer der Vielzahl von Elementesteuerung umfasst. Dabei ist der erste Steuersignalausgang von dem ersten Signaleingang galvanisch getrennt.

Die erfindungsgemäße Vorrichtung kann vorteilhaft zwischen bestehenden oder an sich bekannte zentrale Steuereinheiten und Elementesteuerungen angeordnet werden und dadurch die Verkablung das Anschließen und die Wartung erheblich vereinfachen. Ferner ermöglicht sie ein vervielfältigen der Steuersignale, wodurch mehr verstellbare Elemente mit der zentralen Steuerung angesteuert werden können.

Die galvanische Trennung hat dabei den Vorteil, dass die mit Verteilereinrichtung verbundenen Steuergeräte einfach getrennt werden können, ohne dass die Vorrichtung vollständig abgeschaltet wird. Dies erlaubt den modularen Austausch einzelner Steuergeräte ohne Steuerelemente oder einzelner Elemente ohne dass das System abgeschaltet und danach wieder hochgefahren werden muss. Dadurch werden Wartungsarbeiten wesentlich vereinfacht.

Der Signalweiterleitungsausgang kann mit einer Schleifleitung verbunden sein und entsprechend auch als Schleifleitungsausgang bezeichnet werden.

Als galvanische Trennung kann ein Optokoppler oder ein vergleichbares elektronisches Bauelement verwendet werden.

Neben der ersten Gruppe von verstellbaren Elementen können auch weitere Gruppen verstellbarer Elemente vorgesehen sein. So kann zum Beispiel bei einem Gebäude mit typischerweise vier Fassadenseiten, jeweils einer Fassade eine Gruppe zugeordnet werden, so dass mit einer einzigen zentralen Steuerung verstellbare Elemente an allen vier Fassaden eines Gebäudes gesteuert werden können. Es können jedoch auch Fassaden in kleinere Abschnitte unterteilt werden, so dass eine andere Zahl von Gruppen definiert werden können. Anstatt eine Aufteilung in Fassaden kann auch eine andere Aufteilung, beispielsweise in Gebäudeabschnitte, nach gewünschter Funktion oder nach beliebigen anderen Kriterien vorgenommen werden. Im Extremfall kann einer Gruppe auch nur ein einziges verstellbares Element zugeordnet sein. Erfindungsgemäß werden dabei alle verstellbaren Elemente einer Gruppe gleich gesteuert. Es kann jedoch möglich sein, einzelne Elemente einer Gruppe durch eine manuelle oder direkte Ansteuerung separat zu steuern.

Wenn zum Beispiel eine zweite Gruppe verstellbarer Elemente vorgesehen ist, kann die Vorrichtung für diese zweite Gruppe zusätzlich über einen zweiten Signaleingang zum Empfangen von Steuersignalen für die zweite Gruppe der verstellbaren Elemente, oder einen zweiten Signalweiterleitungsausgang zum Weiterleiten der Steuersignale für die zweite Gruppe der verstellbaren Elemente und über einen zweiten Steuerungsausgang zum Ansteuern von einem oder mehreren Steuerelementen der verstellbaren Elemente der zweiten Gruppe umfassen.

Entsprechend können für beliebig viele weitere Gruppen weitere Ein- und Ausgänge vorgesehen sein.

Die verstellbaren Elemente können verstellbare Fassadenelemente wie Sonneneinrichtungen sein. Die verstellbaren Elemente können jedoch auch andere einstellbare oder verstellbare elektrische Element wie Innen- oder Außenbeleuchtungen oder Heizungssteuerungen, Klimatisierungen, Fensterantriebe, Steckdosen oder andere einstellbare Elemente sein, die eine zentrale Steuerung einer Vielzahl von Elementen erfordern. Bevorzugt sind die verstellbaren Elemente gleichartig, dass heissst entweder nur verstellbare Fassadenelemente oder nur Beleuchtungen.

Jedes der verstellbaren Elemente verfügt über eine Steuereinheit oder ein Steuergerät. Das Steuergerät kann im Fall motorgesteuerter verstellbarer Elemente, ein Motorsteuergerät zur Ansteuerung von Antriebsmotoren oder ähnlichem sein. Das Steuergerät kann über eine separate Stromversorgung verfügen und empfängt von der erfindungsgemäßen Vorrichtung Steuersignale. Diese Steuersignale werden dann in eine Betätigung des verstellbaren Elementes umgesetzt. Es kann vorgesehen sein, dass das Steuergerät eine manuelle Ansteuerung des entsprechenden verstellbaren Fassadenelements erlaubt. Entsprechende Steuergeräte sind an sich im Stand der Technik bekannt. Es kann ein Steuergerät pro verstellbares Element vorgesehen sein. Es kann jedoch auch vorgesehen sein ein Steuergerät für mehrere verstellbare Elemente vorzusehen.

Die erste Verteilereinrichtung wird über die ersten und weiteren Signaleingänge mit Steuersignalen von allgemein im Stand der Technik bekannten zentralen Steuerungen versorgt. Dazu können beispielsweise programmierbare Steuerungen als zentrale Steuerungen verwendet werden, wie sie unter der Bezeichnung "Logo!" von der Siemens AG oder unter der Bezeichnung "Easy" von Klöckner Möller vertrieben werden. Es können jedoch auch allgemeine Speicherprogrammierbare Steuerungen verwendet werden. Die bekannten Steuerungen sind normalerweise für die Steuerung weniger Elemente ausgelegt, können aber mit der vorliegenden Erfindung kostengünstig zur Steuerung umfassender Systeme mit wesentlich erhöhten, im Prinzip unbeschränkten Anzahl von verstellbaren Elementen verwendet werden, wobei die Ansteuerung und Verkabelung jederzeit übersichtlich und wartungsfreundlich bleibt.

Die Verteilereinrichtung kann auch einen separaten Eingang für eine Versorgungsspannung umfassen, welcher beispielsweise von einem separaten Netzteil versorgt werden kann. Diese Versorgungsspannung wird verwendet um eine Versorgungsspannung für die verstellbaren Elemente, bzw. für die Steuerung der verstellbaren Elemente bereitzustellen und um die galvanische Entkopplung bzw. die Optokoppler zu versorgen. Des Weiteren kann die separate Spannungsversorgung der Verteilereinrichtung dazu verwendet werden, eine Versorgungsspannung zur Weiterleitung zu weiteren Verteilerelementen bereitzustellen. Dadurch wird eine Entkopplung von der Spannungsversorgung durch die zentralre Steuerung erreicht, so dass weitere, im Prinzip beliebig viele verstellbare Elemente bzw. Steuerungen für die verstellbaren Elemente mit dem zur Verstellung der Elemente erforderlichen Strom versorgt werden können. Es kann jedoch auch vorgesehen sein, dass die Steuerung der verstellbaren Elemente separat mit Strom versorgt wird und die Verteilereinrichtung nur die Steuerungssignale bereitstellt.

Die von der Vorrichtung weitergeleiteten und verarbeiteten beziehungsweise verteilten Signale, welche an den Signaleingängen angelegt werden können, können digitale Signale sein. Es besteht die Möglichkeit Transistorausgänge einer zentralen Steuerung zu verwenden, was die Lebensdauer erhöht und eine schnellere und sichere Signalübertragung gewährleistet. Durch die vorteilhafte Verwendung der erfindungsgemäßen Vorrichtung kann auf die Verwendung potentialfreier Relaiskontakte verzichtet werden, welche für Oxidation oder Verbrennen der Kontakte störanfälliger sind.

Vorteilhafterweise kann das System modular aufgebaut werden, wobei an dem Schleifleitungsausgang bzw. Signalweiterleitungsausgang einer ersten Verteilereinrichtung eine zweite ähnlich aufgebaute Verteilereinrichtung mit ihrem Schleifleitungsausgang angeschlossen werden kann. Die Signalleitungen dieser zweiten Verteilereinrichtung können ähnlich oder identisch, wie die der ersten Verteilereinrichtung aufgebaut sein und ebenfalls eine Signalweiterleitung und eine galvanisch abgetrennte Signalübertragung umfassen. Darüber hinaus kann die zweite Verteilereinrichtung ebenfalls über eine separate Spannungsversorgung versorgt werden. Dadurch kann vorteilhaft vermieden werden, dass die Steuerungen alle über die zentrale Steuerung versorgt werden müssen. An den Schleifleitungsausgang bzw. Signalweiterleitungsausgang der zweiten Verteilereinrichtung kann dann eine dritte entsprechende Verteilereinrichtung angeschlossen werden und so weiter. Es können beliebig viele Verteilereinrichtungen in Serie geschalten werden. Durch die jeweils separate Spannungsversorgung dieser Verteilereinrichtung kann die Vorrichtung beliebig groß gestaltet werden und beliebig viele Steuerungselemente bzw. verstellbare Elemente angesteuert werden. Eine solche Vorrichtung erlaubt somit eine einfache und günstige zentrale Steuerung zu verwenden, auch wenn große Projekte realisiert werden sollen.

Weiterhin kann jeder der Schleifleitungsausgänge bzw. Signalweiterleitungsausgänge der zweiten Verteilereinrichtung und jeder weiteren Verteilereinrichtung jeweils von der separaten Spannungsquelle der betreffenden Verteilereinrichtung versorgt werden. Dadurch wird sichergestellt, dass die zentrale Steuerung nur mit einer begrenzten Anzahl von Steuergeräten direkt verbunden werden kann und keine Überlastung an der zentralen Steuerung auftreten kann. Damit wird auch ein falsches Anschließen, welches zu einer Überlastung der Vorrichtung und der zentralen Steuerung führen kann vorteilhaft vermieden. Durch die Verwendung mehrerer Verteilereinrichtungen können die erste Gruppe von verstellbaren Elementen und entsprechend die weiteren Gruppen von verstellbaren Elementen in Untergruppen unterteilt werden. Dabei wird jeweils eine Untergruppe von einem Verteilerelement angesteuert. Beispielsweise können die verstellbaren Elemente einer Etage zu einer Untergruppe zusammengefasst werden und auf jeder Etage kann eine Verteilereinrichtung angeordnet sein. Die Aufteilung in Untergruppen und die Anordnung der Verteilereinrichtung kann jedoch auch anders erfolgen und von dem installierenden Fachmann dem jeweiligen Gebäude und den jeweiligen Anforderungen angepasst werden.

Darüber hinaus kann jede der Verteilereinrichtungen als kompaktes Gerät mit beispielweise einer einzigen Leiterplatte ausgeführt sein, an welcher alle Eingänge und alle Ausgänge angeordnet sind. Insbesondere können alle elektronischen Elemente an oder auf der Leiterplatte beziehungsweise Platine angeordnet sein. Dies erlaubt ein einfaches und übersichtliches Anschließen und Verdrahten der kompletten Vorrichtung und Steuerung aller verstellbaren Elemente eines Gebäudes.

Beispielsweise kann jede Verteilereinrichtung auch einen Netzspannungsein- und - ausgang umfassen, um die Verteilung der Netzspannung zu den einzelnen Steuergeräten und weiteren Einrichtungen einfach und übersichtlich zu gestalten. Die Netzspannungsausgänge können auch mit einer Sicherung abgesichert sein.

Darüber hinaus kann zumindest die erste Verteilereinrichtung auch Eingänge und Ausgänge für Sensoren, wie beispielsweise Windsensoren, Regensensoren, Lichtsensoren und Temperatursensoren umfassen, welche Informationen für die Zentralesteuerung bereitstellt, so dass auch diese übersichtlich verdrahtet werden können. Damit kann insbesondere die erste Verteilereinrichtung als Zentrale Verteilereinrichtung für die zentrale Steuereinrichtung oder als sogenanntes Vorschaltgerät aufgebaut sein, welche alle Verbindungen zu den Ein- und Ausgängen der zentralen Steuerung aufweist. Dies hat den Vorteil, dass ein installierender Fachmann oder Elektriker lediglich dieses Vorschaltgerät mit der zentralen Steuerung verbinden muss und keine weiteren Installationen vorgenommen werden müssen.

Es kann vorgesehen sein, dass jeweils nur eine Steuereinleitung für ein Steuergerät der verstellbaren Elemente vorgesehen ist. Um verschiedene Signale an das Steuergerät übermitteln zu können, können beispielsweise gepulste Signale verwendet werden. Es können beispielsweise Pulse unterschiedlicher Länge oder eine unterschiedliche Anzahl von Pulsen über die Signalleitungen übermittelt werden um verschiedene Funktionen wie beispielsweise "Stopp" des verstellbaren Fassadenelements, "Hochfahren" des verstellbaren Fassadenelements, "Herablassen" des verstellbaren Fassadenelements oder das "Abschalten" beziehungsweise Umschalten auf manuelle Steuerung der Steuergeräte zu bewirken. Selbstverständlich können weitere Funktionen auf diese oder ähnliche Weise übertragen werden.

Dementsprechend umfasst die Erfindung auch ein Verfahren zur Steuerung einer Vielzahl von verstellbaren Elementen, bei dem verschiedene Funktionen für die verstellbaren Elemente mittels verschiedener Signalpulse über einen Signaleingang beziehungsweise eine Signalleitung übertragen wird. Es ist somit lediglich eine Signalleitung mit entsprechender Verteilung für jede Gruppe von Elementen notwendig. Neben den Signalleitungen kann noch eine Spannungsversorgung vorgesehen sein.

Die Erfindung umfasst ferner einer Prüf- bzw. Simulationseinrichtung, welche dazu ausgelegt ist mit zumindest einem Prüfling verbunden zu werden. Der Prüfling ist zumindest eines aus der ersten Verteilereinrichtung, der zweiten Verteilereinrichtung, einer weiteren Verteilereinrichtung, einem Steuergerät oder einem anderen Element der Vorrichtung. Die Prüfeinrichtung stellt zumindest ein Prüfsignal an den Prüfling bereit und empfängt zumindest ein Ausgangsignal von dem Prüfling.

Der Prüfling kann einzeln an die Prüf- bzw. Simulationseinrichtung angeschlossen werden oder in die Vorrichtung integriert bzw. mit dieser verbunden sein. Wenn der Prüfling mit anderen Elementen der Vorrichtung verbunden ist, erlaubt es die Prüf- bzw. Simulationseinrichtung auch die Funktion der anderen Elemente und/oder die Interaktion der verschiedenen Elemente der Vorrichtung zu simulieren und/oder zu überprüfen. Anhand der Prüfsignale erlaubt es die Prüf- bzw. Simulationseinrichtung auch die Prüflinge und ihre Verbindung zu erkennen.

Weitere Beispiele der Erfindung, welche lediglich beispielhaft und nicht einschränkend angegeben sind, könnend der nachfolgenden detaillierten Beschreibung eines Beispiels entnommen werden, welche Bezug auf die beigefügten Figuren nimmt.

### Kurze Beschreibung der Figuren

In den Figuren zeigt:
Figur 1 eine schematische Anordnung der Verteilereinrichtung und der Steuerungsgeräte beziehungsweise Steuerungseinheiten, wie sie für ein Gebäude mit verschiedenen Fassadenabschnitten folgen kann;
Figur 2 ein Beispiel einer zentralen Verteilereinrichtung: eine Versorgungsplatine (VSP);
Figur 3 ein Beispiel einer weiteren Verteilereinrichtung: einen Etagenverteiler (ETV);
Figur 4 ein Beispiel eines Schaltplans einer Steuerungseinheit eines verstellbaren Fassadenelements: Motorsteuergerät (MSG); und

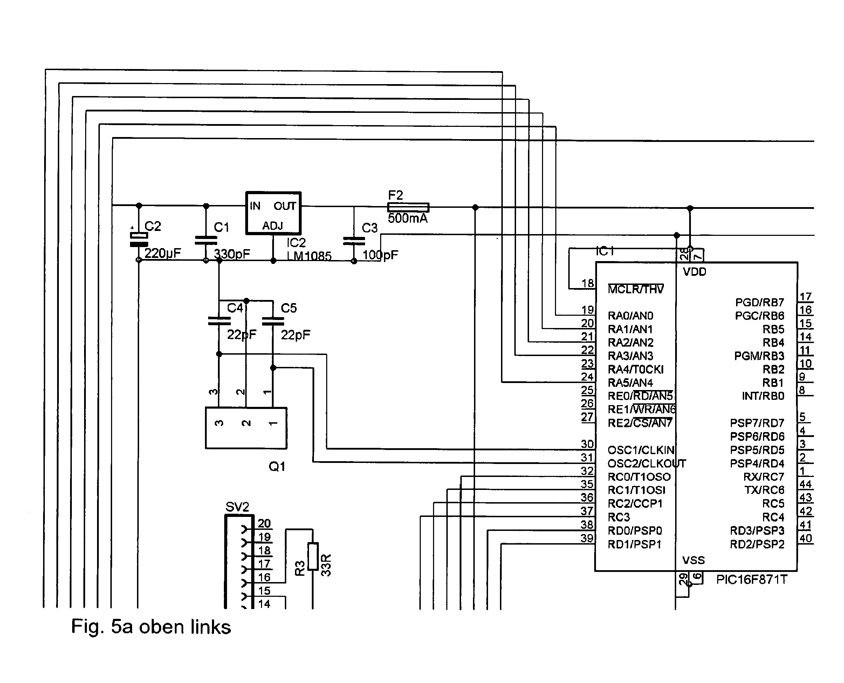

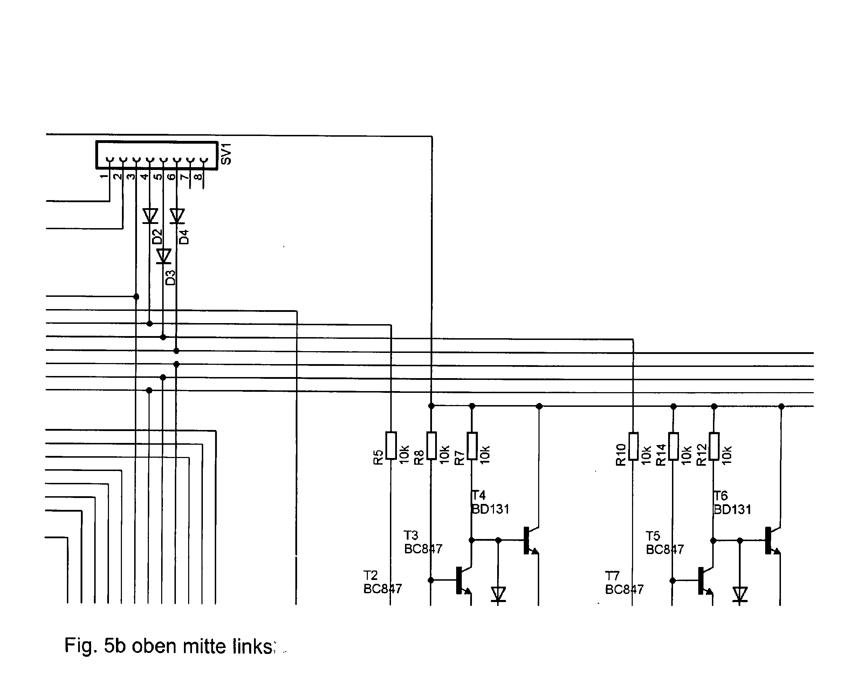

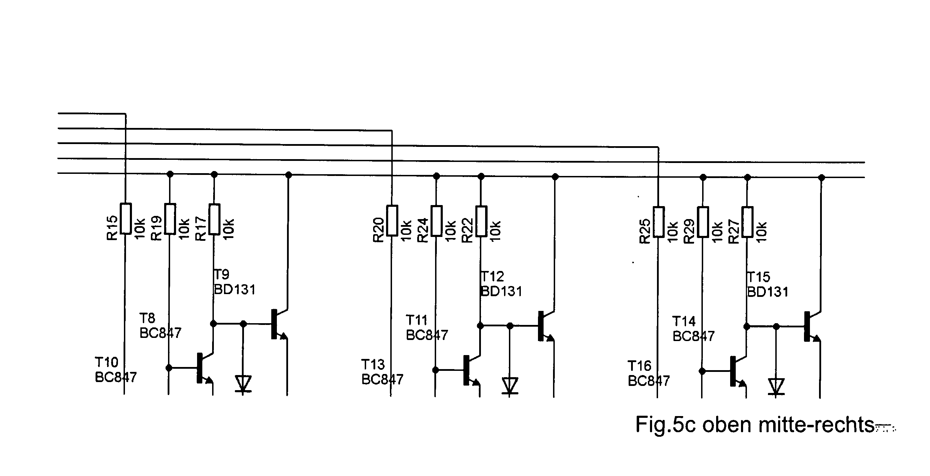

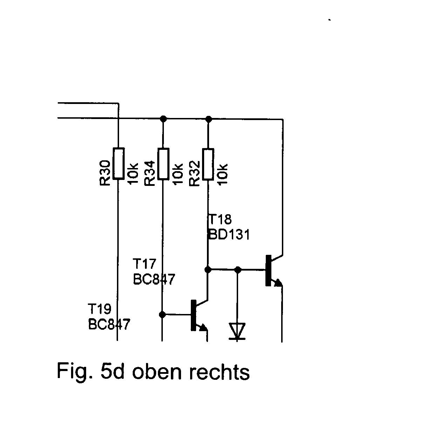

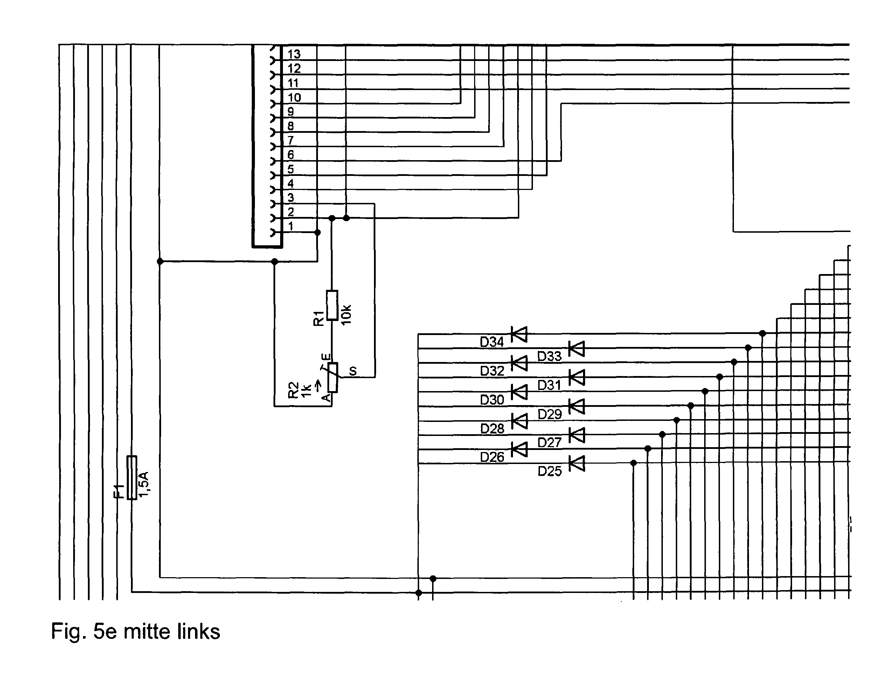

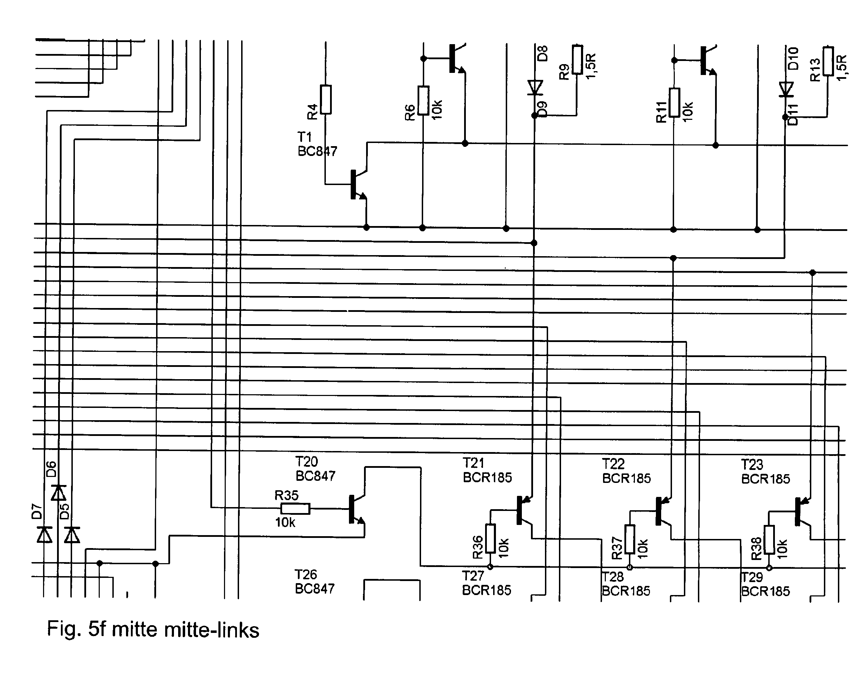

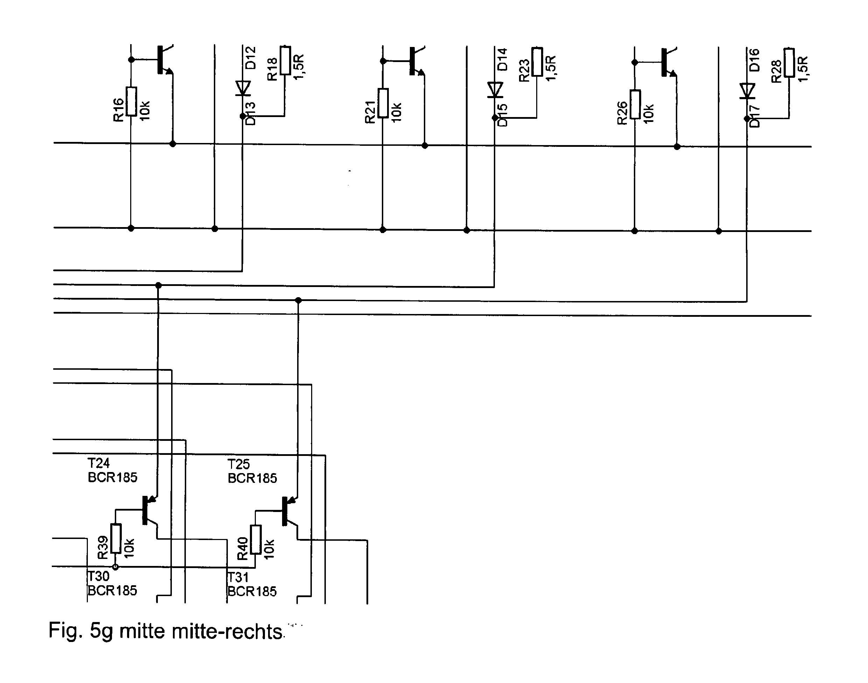

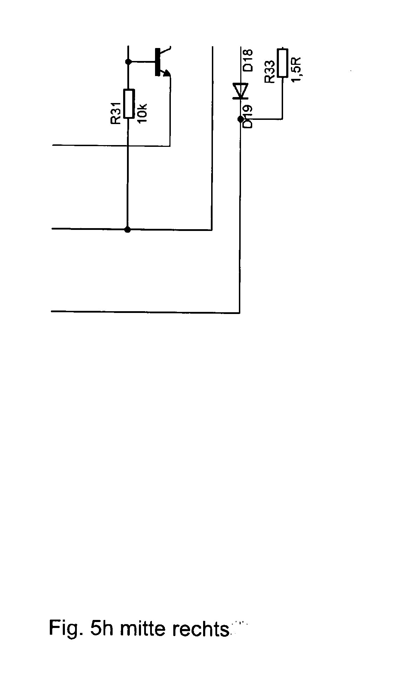

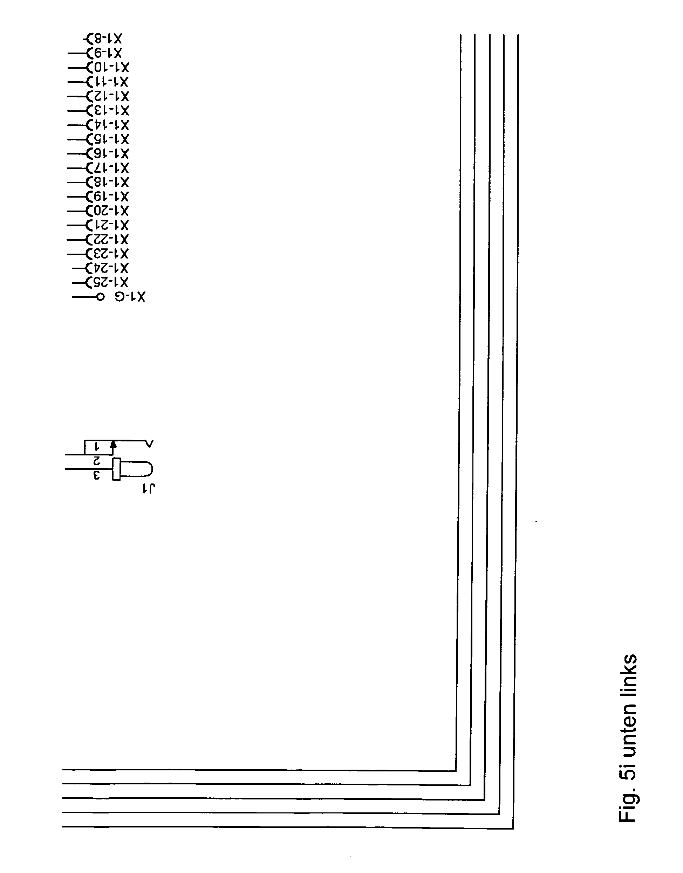

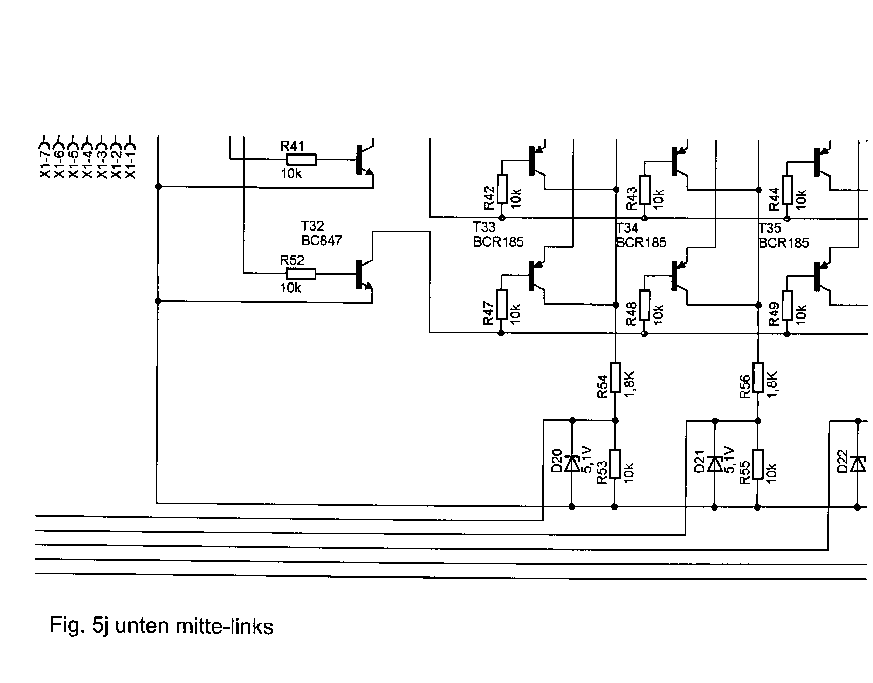

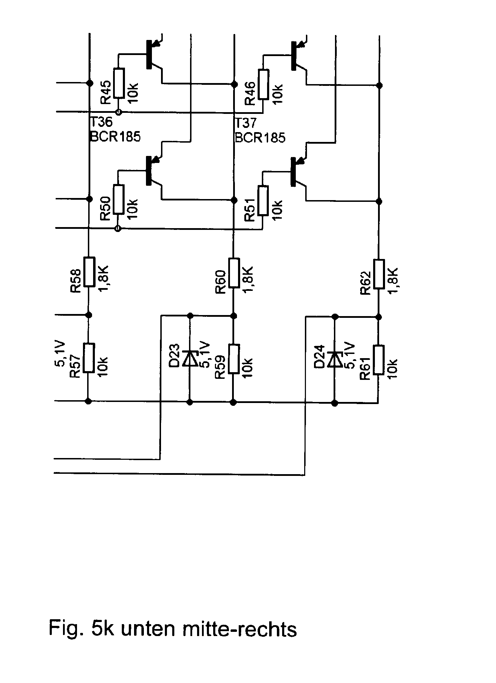

Figur 5 ein Beispiel eines Prüf- und Simulationsgerätes.

### Detaillierte Beschreibung

Die folgende detaillierte Beschreibung eines Beispieles der Erfindung dient lediglich zur Illustration und ist für den Schutzumfang der Erfindung nicht einschränkend. Weitere Abwandlungen der Erfindung sind für den Fachmann ersichtlich.

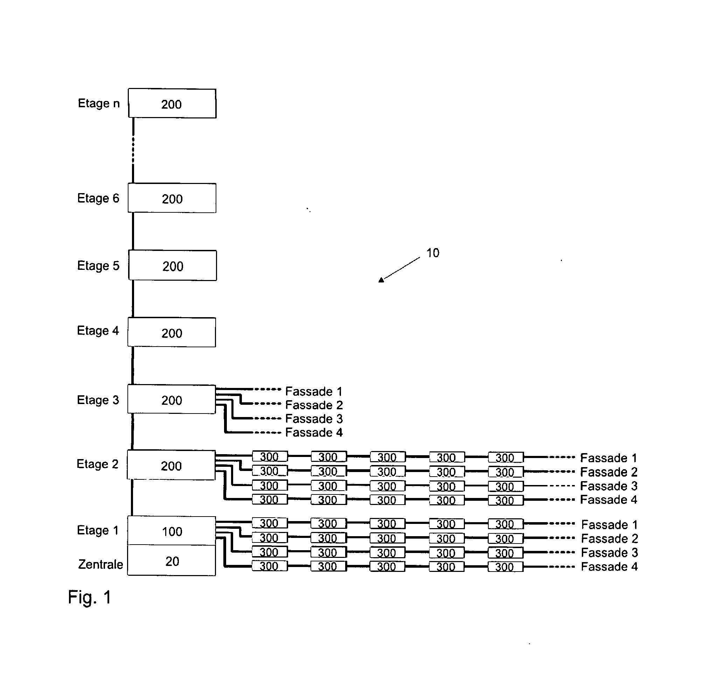

Figur 1 zeigt beispielhaft wie verschiedene Verteilereinrichtungen 100, 200 einer erfindungsgemäßen Vorrichtung 10 miteinander verbunden werden können um eine Vielzahl von Steuereinheiten oder Steuergeräte 300, wie beispielsweise Motorsteuergeräte einer verstellbaren Fassadeneinrichtung anzusteuern. Diese Steuereinheiten 300 können beispielsweise Motoren für verstellbare Fassadenelemente wie Markisen, Jalousien, Rollos oder andere Abschattungseinrichtungen sein. Die Erfindung kann jedoch auch mit anderen Fassadenelementen wie verstellbaren Verglasungen, Verspiegelungen oder anderem verwendet werden. Obwohl die folgende Beschreibung die Erfindung anhand von Fassadenelementen beschreibt, wird ein Fachmann die Beschreibung genauso auf andere steuerbare oder verstellbare Elemente wie Beleuchtungen, Heizungssteuerungen, Klimatisierungen, Fensterantriebe, Steckdosen oder der Gleichen anwenden.

Eine erfindungsgemäße Vorrichtung oder Anlage 10 kann an eine zentrale Steuerung 20 angeschlossen sein. Die zentrale Steuerung 20 kann beispielsweise vom Typ "Siemens LOGO!" sein und mit dem zugehörigen Steuerungsprogramm "LOGO!Soft Comfort" programmiert sein. Als Steuerung 20 kann jedoch ein anderes System verwendet werden, wie bspw. das unter der Bezeichnung "easy" vertriebene System der Firma Möller GmbH (Klöckner-Möller), Deutschland. Eine solche zentrale Steuerung besitzt standardmäßig beispielsweise vier analoge und vier digitale 24V Eingänge sowie vier digitale 24V Ausgänge. Diese Module können jedoch beliebig erweitert werden, so dass eine größere Anzahl von Eingängen und/oder Ausgängen bereitgestellt werden kann. Solche zentrale Steuerungen und ihre Programmierung sind hinreichend bekannt.

Die digitalen Eingänge können beispielsweise für Signale von Wind- und/oder Regensensoren benutz werden. Die vier anlogen Eingänge können mit Lichtsensoren und/oder Temperatursensoren verbunden werden, so dass die wesentlichen Umgebungsparameter Licht, Temperatur, sowie Wind und Regen je nach Anwendung der zentralen Steuerung 20 bereitgestellt werden können. Selbstverständlich sind auch andere Belegungen der Eingänge je nach verwendeten Sensoren und Anwendungen möglich. Die digitalen Ausgänge geben Schaltungssignale für mehrere Gruppen von verstellbaren Fassadenelementen aus. Im Beispiel einer einfachen Steuerung von vier digitalen Ausgängen kann beispielsweise jeweils ein Ausgang für eine der vier Fassaden eines Gebäudes vorgesehen sein. In diesem Fall werden dann alle verstellbaren Fassadenelemente einer Fassade parallel und gleichlaufend gesteuert. Selbstverständlich können auch andere Unterteilungen von Gebäuden oder auch von Fassaden vorgesehen sein.

Vorteilhafterweise können Transistorausgänge verwendet werden. Transistorausgänge erlauben im Gegensatz zu potentialfreien Relaiskontakten, welche üblicherweise verwendet werden, eine längere Lebensdauer und eine schnellere und sichere Signalübertragung.

Die zentrale Steuerung 20 wird mit einer zentralen Verteilereinrichtung 100 verbunden. Die zentrale Verteilereinrichtung 100 kann in unmittelbarer Nähe der zentralen Steuerung 20 angeordnet sein, sie kann jedoch auch an einem anderen geeigneten Ort angeordnet werden.

Darüber hinaus können weitere Verteilereinrichtungen 200 vorgesehen sein, welche seriell hintereinander geschaltet sind und je nach Anforderungen beliebig erweiterbar sind. Beispielsweise können mit jeder Verteilereinrichtung 100, 200 jeweils die verstellbaren Fassadenelemente einer Etage angesteuert werden. So kann beispielsweise auf jeder Etage eine Verteilereinrichtung 100, 200 angeordnet werden, wobei die zentrale Steuerung 20 mit der zentralen Verteilereinrichtung 100 beispielsweise im Erdgeschoss angeordnet ist, während eine erste weitere Verteilereinrichtung 200 in der ersten Etage angeordnet ist, eine zweite weitere Verteilereinrichtung 200 in der zweiten Etage sitzt und so fort. Selbstverständlich sind auch andere Anordnungen und Verteilungen möglich, die je nach Gebäude und Anforderung angepasst werden können.

Jede Verteilereinrichtung kann über die gleiche Anzahl von Signalausgängen verfügen, im dargestellten Beispiel jeweils vier, so dass in jede Etage alle vier Fassaden eines Gebäudes angesteuert werden können. Die Vorrichtung kann somit leicht und übersichtlich an jede Anzahl von Stockwerken angepasst werden. In der Figur 1 sind lediglich für die untere beiden Etagen Verbindungen zu den Fassaden 1 bis 4 dargestellt. Entsprechende Verbindungen können in jeder weiteren Etage vorliegen.

Jede Fassadenverbindung kann über eine oder mehrere Motorsteuerungen 300 verfügen, die für eine Fassade und eine Etage jeweils parallel angesteuert werden.

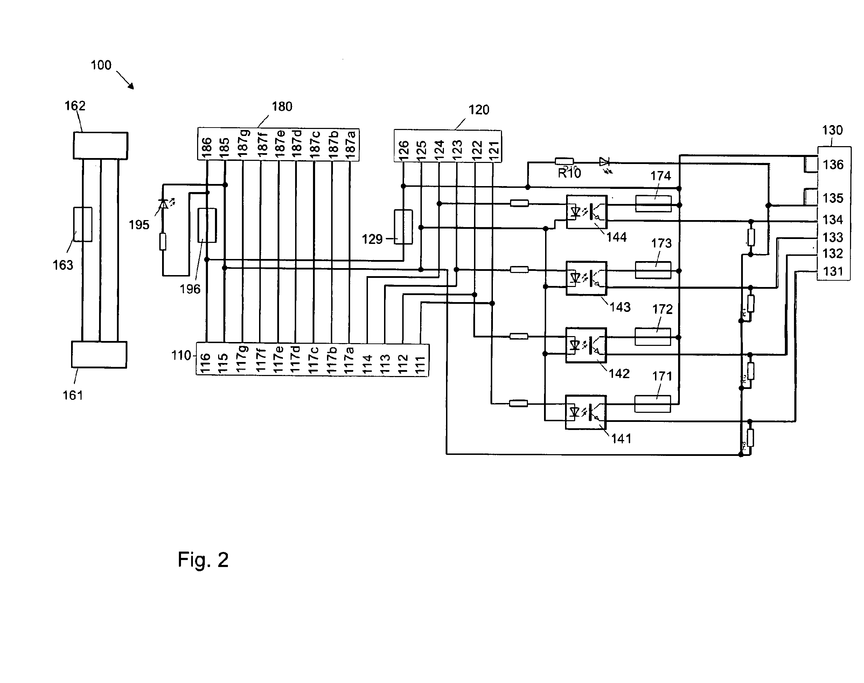

Figur 2 zeigt einen beispielhaften Schaltplan einer zentralen Verteilereinrichtung 100. Dabei können alle Schaltelemente und elektronischen Elemente auf einer einzigen Platine und in einem einzigen Gehäuse angeordnet sein. Die zentrale Verteilereinrichtung 100 verfügt über mehrere Anschlüsse, welche in Form handelsüblicher Steckverbindungen vorgesehen sein können. Diese ermöglicht ein übersichtliches Anschließen der Verkabelung.

Die zentrale Verteilereinrichtung 100 verfügt über einen Zentralsteuerungsanschluss 110 zur Verbindung mit der zentralen Steuerung 20. Dieser Zentralsteuerungsanschluss 110 verfügt über alle notwendigen Leitungen, so dass abgesehen von einer Netzspannungsversorgung oder einem Anschluss an einem Datennetzwerk, keine weiteren Leitungen mit der zentralen Steuerung verbunden werden müssen.

Der Zentralsteuerungsanschluss 110 verfügt über mehrere Sensorausgänge 117a, 117b, 117c, 117d, 117e, 117f, 117g zur Verbindung mit den digitalen und/oder analogen Eingängen der zentralen Steuerung 20 und dienen zur Durchleitung digitaler oder analoger Signale der Regen-, Wind-, Temperatur- oder Lichtsensoren an die zentrale Steuerung 20. Darüber hinaus weist der Zentralsteuerungsanschluss 110 im dargestellten Beispiel zwei Versorgungsspannungseingänge 115, 116 über den die Zentrale Verteilereinrichtung 100 mit einer 24V Gleichstrom-Versorgungsspannung versorgt werden kann. Diese Versorgungsspannung kann der zentralen Steuerung 20 entnommen werden und kann auch zur Versorgung der Sensoren verwendet werden. Dazu verfügt die Versorgungssteuerungseinrichtung 100 über einen Sensoranschluss 180. Zwei Versorgungsspannungsausgänge des Sensorausgangs stellen die 24V Versorgungsspannung für die Sensoren bereit und sind über eine Sicherung 196 abgesichert. Eine Kontrollleuchte 195 zeigt an, dass eine entsprechende Versorgungsspannung anliegt. Der Sensoranschluss 180 verfügt darüber hinaus über Sensoreingänge 187a, 187b, 187c, 187d, 187e, 187f, 187g, welche mit den entsprechenden Sensoren verbunden werden können. Die Sensoreingänge 187a, 187b, 187c, 187d, 187e, 187f, 187g sind in der zentralen Verteilereinrichtung 100 direkt mit den Sensorausgängen 117a, 117b, 117c, 117d, 117e, 117f, 117g verbunden.

Der Zentralsteuerungsanschluss 110 verfügt über vier Signaleingänge 111, 112, 113, 114, welche jeweils zur Verbindung mit den vier digitalen Ausgängen der zentralen Steuerung 20 verwendet werden und die Steuerungssignale für die verstellbaren Fassadenelemente von der zentralen Steuerung übertragen. Die vier Signaleingänge 111, 112, 113, 114 des Zentralsteuerungsanschlusses 110 sind mit entsprechenden Weiterleitungsausgängen 121, 122, 123, 124 eines Weiterleitungsanschlusses 120 verbunden und geben die digitalen Ausgangssignale der zentralen Steuerung 20 im Wesentlichen unverändert weiter. Darüber hinaus verfügt der Weiterleitungsausgang 120 über Versorgungsspannungsausgänge 125, 126, von denen der Pluspol 126 über eine Sicherung 129 abgesichert ist.

Die zentrale Verteilereinrichtung 100 verfügt ebenfalls über einen Steuerungsanschluss 130, an welchen ein oder mehrere Steuerungsgeräte 300 seriell oder parallel angeschlossen werden können. Der Steuerungsausgang 130 verfügt über ein Versorgungsspannungsausgänge 135, 136, welche mit den Versorgungsspannungsausgängen 125, 126 des Weiterleitungsanschlusses 120 verbunden sind. Somit wird eine Versorgungsspannung, z.B. 24V Gleichstrom, den Steuerungsgeräten 300 bereitgestellt.

Darüber hinaus verfügt der Steuerungsausgang 130 über erste, zweite, dritte und vierte Steuerungsausgänge 131, 132, 133, 134, welche Steuerungssignale für die Steuerungselemente 300 bereitstellen. Jeder dieser Steuerungsausgänge 131, 132, 133, 134 sind jeweils über einen Optokoppler 141, 142, 143, 144 mit den Signaleingängen 111, 112, 113, 114 verbunden, jedoch durch die Optokoppler von diesen galvanisch getrennt. Die Ausgangseite der Optokoppler 141, 142, 143, 144 wird dabei mit der Versorgungsspannung, jeweils über eine Sicherung 171, 172, 173, 174, abgesichert versorgt. Die galvanische Trennung mittels Optokoppler hat den Vorteil, dass das Aufsummieren von Störungseinflüssen verhindert wird und die Ansteuerung auch bei großen Anlagen mit einer Vielzahl von Steuereinheiten 300 zuverlässig funktioniert.

Die zentrale Verteilereinrichtung 100 verfügt auch über einen Netzspannungseingang 161 und einen Netzspannungsausgang 162, welcher mit einer Sicherung 163 abgesichert ist. Dies dient zur übersichtlichen Verteilung der Netzspannung in der gesamten Vorrichtung 10.

Darüber hinaus können weitere Elemente wie Kontrollleuchten für die Versorgungsspannung, Widerstände, Kapazitäten oder andere übliche Bauelemente vorgesehen sein.

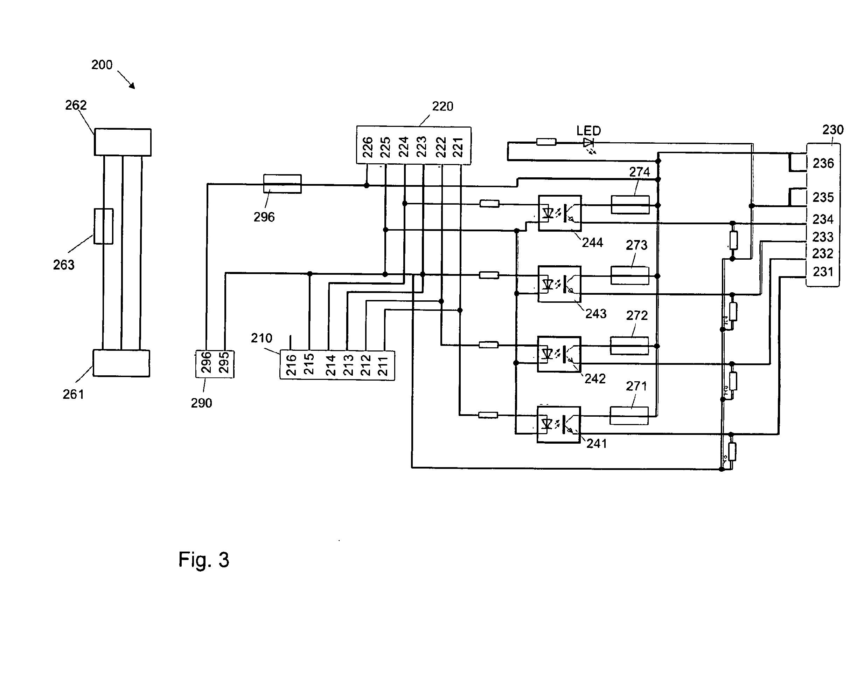

Die Figur 3 zeigt einen beispielhaften Schaltplan einer weiteren Verteilereinrichtung 200, wie sie beispielsweise in den weiteren Etagen verwendet werden kann.

Die weitere Verteilereinrichtung 200 verfügt bezüglich der Signalweiterleitung über einen ähnlichen Aufbau wie Zentrale Verteilereinrichtung 100. Im dargestellten Beispiel verfügt die weitere Verteilereinrichtung 200 jedoch nicht über einen Sensoranschluss. Die weitere Verteilereinrichtung 200 verfügt über einen Signaleingangsanschluss 210 welcher vier Signaleingänge 121, 122, 123, 124 und einen Versorgungsspannungseingang 215, 216 umfasst. Dieser Signaleingansanschluss 210 dient zum Anschluss an den Weiterleitungsanschluss 120 der Zentrale Verteilereinrichtung 100 oder an einen Weiterleitungsanschluss 220 einer anderen, gegebenenfalls vorgeschalteten Verteilereinrichtung 200. Die Signaleingänge 211, 212, 213, 214 sowie eine der Versorgungsspannungsleitungen 215 (minus) sind mit einem Weiterleitungsausgang 220 und entsprechenden Kontakten 221, 222, 223, 224 sowie 225 für die Versorgungsspannung direkt verbunden. Der Weiterleitungsausgang 220 dient zur Verbindung mit weiteren Verteilereinrichtungen 200, welche beispielsweise über eine Schleifleitung angeschlossen werden können. Anstelle von weiteren Verteilereinrichtungen 200 können auch, je nach Anwendung, einfache Klemmverteiler zur weiteren Verteilung verwendet werden.

Die weitere Verteilereinrichtung 200 verfügt ebenfalls über einen Signalausgangsauschluss 230, welcher über Signalausgänge 231, 232, 233, 234 verfügt. Diese Signalausgänge sind über Optokoppler 241, 242, 243, 244 mit den Signaleingängen 211, 212, 213, 214 verbunden und jeweils über Sicherungen 271, 272, 273, 274 abgesichert. Diesbezüglich ist die weitere Verteilereinrichtung 200 ähnlich oder identisch zur zentralen Verteilereinrichtung 100 aufgebaut.

Die weitere Verteilereinrichtung 200 unterscheidet sich jedoch im dargestellten Beispiel von der zentralen Verteilereinrichtung darin, dass keine Ein- und Ausgänge für die Sensorensignale bereitgestellt sind. Darüber hinaus verfügt die weitere Verteilereinrichtung 200 über einen Versorgungsspannungseingang 290, welcher über ein Netzteil eine Versorgungsspannung von 24V bereitstellt. Diese Versorgungsspannung wird über eine Sicherung 296 abgesichert und an dem Ausgang 226, 236 (plus) des Weiterleitungsanschlusses 220 und des Steuerungsanschlusses 230 bereitgestellt. Dadurch wird die an die weitere Verteilungseinrichtung 200 angeschlossenen Steuerungen und weiteren Verteilereinrichtungen von der Spannungsversorgung der zentralen Steuerung 20 abgekoppelt und werden über den Versorgungsspannungseingang 290 unabhängig mit Strom versorgt. Dies erlaubt es, das System beliebig zu erweitern, da nicht auf die Leistungsfähigkeit der zentralen Steuerung 20 Rücksicht genommen werden muss.

Darüber hinaus verfügt die weitere Verteilereinrichtung 200 über Netzspannungseingänge 261 und einen Netzspannungsausgang 262, welcher mit einer Sicherung 263 abgesichert ist. Diese dienen zur übersichtlichen und sicheren Verteilung der Netzspannung in der gesamten Steuerungsvorrichtung. Zudem kann ein Wartungstechniker jederzeit sehen, welche Kabel eine Netzspannung führen.

Die erfindungsgemäße Vorrichtung erlaubt daher durch einfaches Abstecken entsprechender Stecker einzelne Steuereinheiten oder Etagen in einzelne Verteilereinrichtungen zu Wartungszwecken oder sonstigen Zwecken Außerbetrieb zu nehmen, wobei die restliche Steuerung funktionsfähig und eingeschaltet verbleiben kann. Dies erleichtert Wartungsarbeiten erheblich und beschleunigt die Installation der Einrichtung.

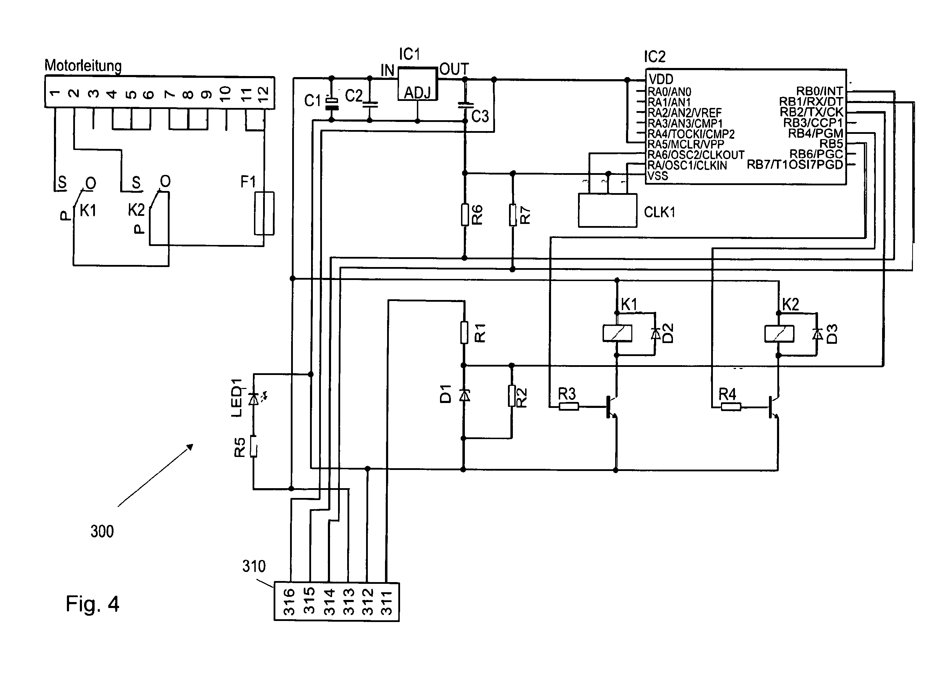

Figur 4 zeigt ein Beispiel einer Steuerungseinheit oder Elementesteuerung 300 und dient zur Auswertung der über die Steuerungsausgänge 130, 230 verteilten Signale und zur entsprechenden Ansteuerung von Antriebsmotoren der verstellbaren Fassadenelemente. Die Steuerungseinheit 300 verfügt dazu über einen Steuerungsleitungseingang 310, welcher mit dem Steuerungsausgang 130, 230 der Verteilereinrichtung 100, 200 verbunden werden kann.

Die Steuerungseinheit 300 nimmt die Signale der zentralen Steuerung 20 über die Verteilereinrichtungen 100, 200 sowie optionalen Handbediendung der einzelnen Fassadenelemente auf, und wandelt diese beispielsweise mittels eines Mikrocontrollers (z. B. PIC) und steuert den Motor des verstellbaren Fassadenelementes entsprechend.

Zur Steuerung der einzelnen Fassadenelemente beziehungsweise der einzelnen Funktionen der Fassadenelemente ist lediglich eine einzelne Steuerleitung vorgesehen. Um verschiedene Funktionen ausführen zu können, wird ein gepulstes Signal verwendet. Beispielsweise kann vorgesehen sein, dass an jedem Ausgang ein dauerhaftes Signal angelegt ist um anzuzeigen, dass die Steuerung in Ordnung ist und fehlerfrei funktioniert. Fällt das Signal dauerhaft aus, weil beispielsweise die zentrale Steuerung 20 ausgefallen ist oder abgeschaltet wurde, kann vorgesehen sein, dass alle Fassadenelemente in eine Sicherheitsstellung gebracht werden. Dann werden beispielsweise alle verstellbaren Fassadenelemente hoch gefahren. Sollte nun ein entsprechendes Steuerungsgerät oder eine entsprechende Verteilereinrichtung 100, 200 abgesteckt werden, fällt das Signal dauerhaft aus und die entsprechenden verstellbaren Fassadenelemente werden in ihre Sicherheitsstellung verfahren. Das gleiche geschieht, wenn aus einem anderen Grund eine Störung der Signalübertragung oder der zentralen Steuerung 20 auftreten sollte.

Üblicherweise überträgt die Steuerleitung jedoch keine Versorgungsspannung. Die Steuerungseinheit kann über eines separate Versorgungsleitung mit Strom zum Betrieb der verstellbaren Elemente versorgt werden.

Zur Steuerung der Fassadenelemente können verschiedene Signale vorgesehen sein, welche beispielsweise durch ein kurzes Unterbrechen des Signals dargestellt werden können. Beispielsweise kann ein einmaliges kurzes Unterbrechen (0,1 bis 0,5 Sekunden) als Stoppsignal verwendet werden. Ein zweimaliges Unterbrechen kann ein Signal sein die Fassadenelemente hoch zu fahren, ein dreimaliges Unterbrechen des Signals kann als Signal verwendet werden die Fassadenelemente abzufahren und entsprechend können weitere Signale definiert werden und für weitere Steuerungen der entsprechenden Fassadenelemente verwendet werden.

Die Steuerungseinheiten bzw. Elementesteuerungen 300 sind dann entsprechend programmiert, um basierend auf diese gepulsten Signale die Motoren der Fassadenelemente entsprechend zu steuern, damit sie die verstellbaren Fassadenelemente in die entsprechende Stellung bringen.

Die vorliegende Erfindung erlaubt es somit lediglich eine Signalleitung pro Gruppe von Fassadenelementen zu verwenden, was die Verkabelung und Installation erheblich vereinfacht und kostengünstiger ist. Beispielsweise kann bei einer durchschnittlichen Fassade die Anzahl der Anschlüsse und die Verkabelung um 65% reduziert werden. Darüber hinaus hat der modulare Aufbau mit verschiedenen Steckverbindungen den Vorteil, das einzelne Elemente leicht abgekoppelt werden können und ein übersichtlicher Aufbau der Verkabelung und der Installation erreicht werden kann. Dadurch ergibt sich ein wartungsfreundliches Austauschsystem. Zum Austausch einzelner Elemente oder Komponenten ist es nicht notwendig die gesamte Anlage abzuschalten. Der nicht auszutauschende Rest der Anlage bleibt voll funktionsfähig.

Dazu wird auch eine Prüfeinrichtung oder Simulationseinrichtung 400 bereit gestellt. Die Prüf- bzw. Simulationseinrichtung 400, im Folgenden als Prüfgerät bezeichnet, überprüft die verlegten Leitungen mit ihrem Anschluss der Verteilungseinrichtungen und Steuerungen untereinander. Durch geeignete Prüfsignale werden die in der Anlage installierten Verteilungseinrichtungen und Steuerungen ermittelt. Eingänge und Ausgang von jedem Teilnehmer oder Komponenten (Verteilereinrichtung, Steuerungen) der Anlage werden ermittelt. Jeder Teilnehmer wird erkannt und per Display angezeigt. Somit wird eine Funktionskontrollemethode geschaffen, ohne dass die zentrale Steuerung 20 als Teilnehmer von bedarf ist. Die gesamt Anlage kann somit vor der Installation oder Inbetriebnahme durch Simulation auf ihre Funktion getestet und erst dann mit der zentralen Steuerung 20 verbunden werden. Mit dem Prüfgerät wird eine Basis geschaffen alle Komponenten der Anlage einfach und mit geringem Aufwand zu installieren und zu warten. Dies gilt insbesondere im Zusammenhang mit dem oben beschriebenen Austauschsystem, welches erlaubt einzelne Komponenten der Anlage auszutauschen oder hinzuzufügen, ohne die Anlage außer Betrieb nehmen zu müssen.

Zur Simulation oder Prüfung wird das Prüfgerät 400 mit dem Prüfling, entweder der vollständigen Anlage, einer einzelnen Komponente oder einem Verbund zusammengeschlossener Komponenten verbunden.

Wenn der Prüfling eine Spannungsversorgung hat, kann das Prüfgerät mit dieser Spannung versorgt werden. Eine separate Spannungsversorgung ist dann nicht notwendig. Das Prüfgerät kann aber auch separat mit einer Versorgungsspannung von 24V DC, über einen dafür vorgesehenen Anschluss, verbunden werden.

Das Prüfgerät 400 erkennt nun automatisch, welche Leitung angeschlossen wurde und damit, welcher Prüfling vorliegt und geprüft werden soll. Ein Display informiert direkt nach dem Start den Bediener über das Ergebnis der automatischen Erkennung und über die nächsten möglichen Optionen, die der Bediener hat. Diese Optionen sind in der Regel verschiedene mögliche Eingaben, z.B. über Drucktaster oder eine andere Eingabeeinrichtung am Prüfgerät und hängen vom angeschlossenen Prüfling ab. Alle Prüflinge haben die Option "Prüfung Start" gemeinsam. Danach können eventuelle weitere Optionen gewählt werden.

Abhängig vom angeschlossenen Prüfling können vorher bestimmte Einstellungen vorgenommen und danach der eigentliche Prüfvorgang eingeleitet werden. Nach Beendigung der Prüfung wird der Bediener über das Ergebnis der Prüfung informiert.

Das Prüfgerät 400 besitzt Ausgänge, um gewünschte Zustände auf den Prüflingen herzustellen, und Eingänge, um diese Zustände abzufragen. Ein Mikrocontroller des Prüfgeräts fragt Bedienereingaben ab, die über im dargestellten Beispiel drei Drucktaster 402, 403, 404 erfolgen können, ab.

Bei den Ausgängen, die die verschiedenen Zustände im Prüfling auslösen sollen, handelt es sich um spezielle kurzschlussfeste Transistorausgänge. Die Transistorausgänge garantieren eine Langlebigkeit und höhere Zuverlässigkeit. Die Ausgänge sind kurzschlussfest, damit bei einem Defekt (Kurzschluss) im Prüfling kein zu hoher Strom fließt, der das Prüfgerät zerstören würde. Vom Mikrocontroller werden die Ausgänge überwacht, um einen Kurzschluss zu erkennen.

Die Eingänge, welche die Zustände im Prüfling wiedergeben, können wahlweise digitale oder analoge Eingänge, sein und mit digitalen oder analogen Ausgängen der Prüflinge verbunden sein. Dies wird vom Mikrocontroller gesteuert, an welchen auch die Eingänge weitergeleitet werden, um die richtige Funktion des Prüflings zu prüfen.

Das Display des Prüfgeräts 400 ist beispielsweise ein zweizeiliges Dot-matrixdisplay mit zwanzig Zeichen pro Zeile (2x20). Die Daten werden vom Mikrocontroller in paralleler Datenübertragung zum Display übermittelt. Das Display besitzt über eine gute Hintergrundbeleuchtung, um eine klare Anzeige und damit eine gute Lesbarkeit zu gewährleisten.

Ein Fachmann wird selbstverständlich erkennen, dass weitere Modifizierungen und Anpassungen der Vorrichtung vorgesehen werden können um die hier vorgeschlagene Erfindung an verschiedene Anforderungen und Ausführungen von verschiedenen Gebäuden oder anderen Anwendungen anzupassen. Beispielsweise ist die Anwendung nicht auf übliche verstellbare Fassadenelemente wie Markisen oder Jalousien beschränkt, sondern es können auch andere Elemente, wie in ihrer Lichtdurchlässigkeit veränderbare Elemente oder Beleuchtungselemente, sowohl für die Innen- als auch für die Außenbeleuchtung, Heizungen und/oder Klimatisierungen oder Steckdosen oder Netzwerkverbindungen mit der Erfindung angesteuert werden.

## Patentansprüche

1. Vorrichtung (10) zur Steuerung einer Vielzahl von verstellbaren Elementen eines Gebäudes, wobei die Vorrichtung (10) zur Anordnung zwischen einer zentralen Steuereinheit (20) und einer Vielzahl von Elementesteuerungen (300), welche der Vielzahl von verstellbaren Elementen zugeordnet sind, ausgelegt ist, und wobei die Vorrichtung zumindest eine erste Verteilereinrichtung (100; 200) umfasst, welche umfasst:
- zumindest einen ersten Signaleingang (111, 112, 113, 114; 211, 212, 213, 214) zum Empfangen von Steuersignalen für die Vielzahl der verstellbaren Elemente von der zentralen Steuereinheit (20);
- zumindest einen ersten Signalweiterleitungsausgang (121, 122, 123, 124; 221, 222, 223, 224) zum Weiterleiten der Steuersignale für die Vielzahl der verstellbaren Elemente;
- zumindest einen ersten Steuersignalausgang (131, 132, 133, 134; 231, 232, 233, 234) zum Ansteuern zumindest einer der Vielzahl von Elementesteuerung (300) , wobei der erste Steuersignalausgang von dem ersten Signaleingang galvanisch getrennt ist.

2. Vorrichtung (10) nach Anspruch 1, wobei der erste Steuerungsausgang von dem ersten Signaleingang mittels eines Optokopplers (141, 142, 143, 144; 241, 242, 243, 244) galvanisch getrennt ist.

3. Vorrichtung (10) nach Anspruch 1 oder 2, wobei die erste Verteilereinrichtung einen Versorgungseingang (115, 116; 290) für einer Versorgungsspannung umfasst, welcher mit einem Steuerungsversorgungsausgang (135, 136; 235, 236) verbunden ist, um eine Versorgungsspannung für die zumindest eine Elementesteurung bereit zu stellen.

4. Vorrichtung (10) nach einem der vorangehenden Ansprüche, wobei die zentrale Steuerung eine eine programmierbare Steuerung (20) ist.

5. Vorrichtung (10) nach einem der vorangehenden Ansprüche, wobei die Signaleingänge (111, 112, 113, 114) der ersten Verteilereinrichtung zur Verbindung mit digitalen Signalausgängen der zentralen Steuerung (20) ausgelegt sind.

6. Vorrichtung (10) nach einem der vorangehenden Ansprüche, wobei die Vorrichtung zudem zumindest eine zweite Verteilereinrichtung (200) umfasst, welche umfasst:
- zumindest einen ersten Signaleingang (211, 212, 213, 214) zum Empfangen von Steuersignalen für die Vielzahl der verstellbaren Elemente;
- zumindest einen ersten Signalweiterleitungsausgang (221, 222, 223, 224)zum Weiterleiten der Steuersignale für die Vielzahl der verstellbaren Elemente;
- zumindest einen zweiten Steuersignalausgang (231, 232, 233, 234) zum Ansteuern von zumindest einem zweiten der Vielzahl der Elementesteuerungen, wobei der zweite Steuersignalausgang von dem ersten Signaleingang galvanisch getrennt ist,
wobei im Betrieb der Vorrichtung der zumindest eine erste Signaleingang der zweiten Verteilereinrichtung mit dem zumindest einen ersten Signalweiterleitungsausgang zum Weiterleiten der Steuersignale für die erste Gruppe der verstellbaren Elemente der ersten Verteilereinrichtung verbunden ist.

7. Vorrichtung nach Anspruch 6, wobei zumindest eine erste Gruppe der verstellbaren Elemente parallel gesteuert wird und in zumindest eine erste und eine zweite Untergruppe unterteilt ist, wobei die erste Untergruppe mittels des ersten Steuersignalausgangs der ersten Verteilereinrichtung gesteuert wird und die zweite Untergruppe mittels des zumindest einen Steuersignalausgangs der zweiten Verteilereinrichtung gesteuert wird.

8. Vorrichtung nach Anspruch 6 oder 7, wobei die zweite Verteilereinrichtung (200) eine Spannungsversorgung umfasst, welche einen Versorgungseingang (290) der zweiten Verteilereinrichtung unabhängig von der ersten Verteilereinrichtung mit elektrische Energie versorgt, welcher mit einem Steuerungsversorgungsausgang der zweiten Verteilereinrichtung verbunden ist, um eine Versorgungsspannung für das eine oder die mehreren der verstellbaren Elemente bereit zu stellen.

9. Vorrichtung nach einem der Ansprüche 6 bis 8, zudem umfassend zumindest eine weitere Verteilereinrichtung, welche im Wesentlichen der zweiten Verteilereinrichtung entspricht und in Serie zu der ersten und der zweiten Verteilereinrichtung geschaltet ist.

10. Vorrichtung nach einem der vorangehenden Ansprüche, wobei zumindest die erste Verteilereinrichtung einen Netzspannungseingang (161; 261) und einen mit dem Netzspannungseingang verbundenen Netzspannungsausgang (162; 262) umfasst.

11. Vorrichtung nach einem der vorangehenden Ansprüche, wobei die erste Verteilereinrichtung zudem einen oder mehrere Eingänge und einen oder mehrere Ausgänge zu Übertragung von Sensorsignalen aufweist.

12. Vorrichtung nach einem der vorangehenden Ansprüche, wobei alle Eingänge und alle Ausgänge einer Verteilereinrichtung auf einer einzigen Leiterplatte angeordnet sind.

13. System zur Steuerung einer Vielzahl von verstellbaren Elementen, wobei zumindest eine erste Gruppe der verstellbaren Elemente parallel gesteuert wird, wobei das System eine Vorrichtung gemäß einem der vorangehenden Ansprüche umfasst und mittels einer programmierbaren Steuerung ein digitales Signal an dem zumindest einen ersten Signaleingang zum Empfangen von Steuersignalen der ersten Verteilereinrichtung bereitgestellt wird, wobei die Vorrichtung das digitale Signal an alle verstellbaren Elemente der ersten Gruppe bereit stellt.

14. System nach Anspruch 12, wobei das Steuersignal aus einer unterschiedlichen Anzahl von Pulsen oder unterschiedlich langen Pulsen besteht.

15. Verfahren zur Steuerung einer Vielzahl von verstellbaren Elementen, wobei zumindest eine erste Gruppe der verstellbaren Elemente parallel gesteuert wird und wobei ein Steuersignal über eine Vorrichtung gemäß einem der Ansprüche 1 bis 11 allen Elementen der ersten Gruppe bereitgestellt wird, wobei verschiedenen Funktionen der verstellbaren Elemente der ersten Gruppe mittels verschiedener Signalpulse über die ersten Signaleingang übertragen wird.

16. Prüfeinrichtung (400), welche dazu ausgelegt ist mit zumindest einer aus der ersten Verteilereinrichtung (100; 200) der zweiten Verteilereinrichtung (200) oder einer weiteren Verteilereinrichtung (200) nach einem der Ansprüche 1 bis 11 verbunden zu werden, wobei die Prüfeinrichtung zumindest ein Prüfsignal an die Verteilereinrichtung bereitstellt und eine Ausgangsignal der Verteilereinrichtung (100, 200) empfängt.
